# FASCICULE DE BREVET EUROPEEN

(11) **EP 4 011 477 B1**
(45) Date de publication et mention de la délivrance du brevet: **15.04.2026**
(21) Numéro de dépôt: 20213551.3
(22) Date de dépôt: 11.12.2020
(51) Int. Cl.: B01D 29/56, B01D 35/30

(54) **SYSTÈME DE FILTRATION MODULABLE AVEC RACCORD POLYGONAL AMOVIBLE**
MODULIERBARES FILTERSYSTEM MIT ABNEHMBAREM POLYGONALEN ANSCHLUSS
MODULAR FILTER SYSTEM WITH REMOVABLE POLYGONAL CONNECTOR

(43) Date de publication de la demande: 15.06.2022
(73) Titulaire: Hydro Systemes Holding, 13830 Roquefort-La-Bédoule (FR)
(72) Inventeur: ESPOSITO, François, 13260 CASSIS (FR)
(74) Mandataire: IP Trust

(56) Documents cités:
- CA-A1- 2 997 163
- US-A1- 2017 259 196
- US-A1- 2019 291 029

## Description

### DOMAINE TECHNIQUE ET OBJET DE L'INVENTION

La présente invention se rapporte au domaine de la filtration, en particulier pour les filtrations de liquide tels que de l'eau.

L'invention concerne en particulier un système de filtration modulaire pour assembler des cartouches de filtration, grâce auquel il est possible de raccorder une même cartouche de filtration à des tuyaux de diamètre différent et d'assembler au moins deux cartouches de filtration consécutives longitudinalement, sans avoir besoin de vis ni d'autres accessoires d'assemblages similaires.

### ETAT DE LA TECHNIQUE

Dans le domaine de la filtration de liquides, tel que par exemple les canalisations de traitement des eaux, il est important de pouvoir raccorder les tuyaux de canalisation aux contenants de filtration. Il est à noter qu'un contenant de filtration comprend une tête de filtration comprenant des moyens de connexion permettant le raccord aux tuyaux de canalisation, surmontant une cartouche filtrante s'insérant dans un logement et conçue d'une surface filtrante constituée de pores dont la taille varie selon la filtration d'éléments souhaitée. On notera également qu'il existe divers types de tuyauterie d'alimentation en liquide. L'extrémité libre d'un tuyau est muni d'un raccord (ou embout de raccord ou dispositif de raccordement) pour raccorder de manière étanche ledit tuyau à la tête du contenant de filtration. Cependant, il existe différents types de raccords selon le matériau du tuyau de canalisation. Un problème dans le domaine de la filtration concerne les raccords aux tuyaux qui n'ont pas toujours le même diamètre que ceux des raccords des têtes des contenants de filtration auxquels ils sont raccordés.

Il est important de pouvoir relier facilement les tuyaux de part et d'autre d'un contenant de filtration. Il peut être nécessaire également de réaliser plusieurs filtrages successifs. De plus, les tuyaux de canalisation sont généralement utilisés avec de l'eau circulant sous pression ce qui peut engendrer des problèmes de fuites, notamment en cas de surpression au moment de la variation brusque de la vitesse d'un liquide, par suite d'une fermeture ou d'une ouverture rapide d'une vanne, d'un robinet ou, du démarrage ou de l'arrêt d'une pompe. Cette surpression peut être importante, et peut entraîner la rupture du conduit du fait de la quantité d'eau en mouvement.

Actuellement, les modèles de filtres proposés sont constitués d'un récipient à l'intérieur duquel se trouve une cartouche filtrante, surmonté d'une tête de filtration comprenant une entrée et une sortie, raccordée à un tuyau de canalisation, d'un verrou, par exemple un écrou, et d'un raccord vissé sur la tête de filtration comprenant un insert fixe, permettant le maintien du tuyau à la tête de filtration. L'entrée et la sortie de la tête de filtration présentent un filetage de forme cylindrique dont le diamètre est adapté pour permettre la connexion avec le tuyau également de forme cylindrique.

Il existe un grand nombre de systèmes de filtration sur le marché, notamment des kits de filtration à monter sur l'alimentation d'eau comprenant par exemple une cartouche filtrante jetable anti-boue et une cartouche à sels polyphosphates anticalcaire. Ce type de kits comprend généralement aussi un support mural et une clé pour permettre le montage. Cependant, ces kits de l'art antérieur présentent l'inconvénient de posséder un unique moyen de raccordement de dimensions précises et invariables, ce qui oblige à rajouter des éléments de raccord supplémentaires pour leur adaptation sur les divers éléments de raccord des types de tuyauterie de dimensions variables.

On connait également des filtres à cartouches AQUA^{®} polyvalents et comprenant une large gamme d'éléments filtrants. Ce type de filtres est très largement utilisé mais il présente un filetage de forme cylindrique dont le diamètre est principalement imposé par le diamètre minimum de cintrage possible des éléments blindés qui y sont soudés ou brasés.

Cependant, une telle solution présente des inconvénients car elle nécessite que le filetage soit adapté aux dimensions exactes du tuyau et ne permet pas de s'adapter à des raccords autres que ceux prévus pour ce type de raccord.

On connait également des demandes de brevet US2019/291029 et CA2997163 d'autres exemples de réalisation de systèmes de filtration d'eau comprenant une tête de filtration raccordée à un connecteur destiné à relier le système de filtration à une installation de filtration.

L'invention vise donc à résoudre ces inconvénients en proposant un système de filtration modulable comprenant au moins un raccord polygonal amovible interchangeable.

La présente invention se propose de palier un ou plusieurs inconvénients de l'art antérieur et notamment de proposer une solution, facile d'utilisation et économique, qui permette de raccorder les tuyaux à une cartouche de filtration, quel que soit la dimension du tuyau, grâce à un raccord polygonal amovible interchangeable, tout en maintenant une étanchéité du dispositif de canalisation, ainsi que l'assemblage et le couplage rapide, simple et solide de plusieurs cartouches de filtration.

### PRESENTATION GENERALE DE L'INVENTION

Pour parvenir à ce résultat, la présente invention concerne un système de filtration selon la revendication 1.

Selon une autre particularité, le moyen de connexion réciproque de forme polygonale est de préférence de forme octogonale.

Selon une autre particularité, le moyen de connexion réciproque de forme polygonale est de forme et de dimension adaptées aux connecteurs.

Selon une autre particularité, le moyen d'étanchéité est un joint torique.

Selon une autre particularité, le joint torique est maintenu dans une gorge d'étanchéité. L'invention concerne également un dispositif de filtration comprenant un système de filtration tel que brièvement décrit ci-dessus, ledit dispositif comprenant un ensemble de têtes de filtration comprenant une première tête de filtration reliée à au moins une deuxième tête de filtration grâce à des connecteurs dans un montage de type montage en série.

L'invention concerne également un procédé de fabrication d'un système de filtration mis en œuvre par le dispositif tel que décrit précédemment, le procédé comprenant les étapes suivantes :
Ménagement d'au moins un logement polygonal dans une tête de filtration,
Fourniture d'au moins un connecteur ayant une extrémité de forme polygonale complémentaire audit logement comprenant une gorge d'étanchéité dans laquelle est insérée un moyen d'étanchéité et un conduit sensiblement cylindrique d'entrée du liquide dans une cartouche de filtration.

L'invention concerne également un kit pour adaptation d'un système de filtration existant comportant au moins une cartouche de filtration, au moins un connecteur, au moins un raccord, au moins un verrou amovible, au moins un moyen de connexion réciproque tels que décrits précédemment, le moyen de connexion réciproque étant interchangeable grâce au fait qu'il présente à sa sortie une portion filetée de diamètre variable rendant le système compatible avec divers raccords.

### PRESENTATION DES FIGURES

D'autres caractéristiques et avantages de l'invention apparaîtront à la lecture de la description détaillée des modes de réalisation de l'invention, donnés à titre d'exemple uniquement, et en référence aux dessins qui montrent :
[Fig. 1] représente un schéma en perspective d'une tête de cartouche de filtration comprenant un moyen de connexion polygonal selon l'invention.
[Fig. 2] représente un schéma en perspective d'un connecteur simple selon l'invention.
[Fig. 3] représente un schéma en perspective d'un double connecteur selon l'invention.
[Fig. 4] représente un schéma en perspective d'un verrou amovible.
[Fig. 5] représente un schéma en perspective d'un raccord maintenu dans une tête de cartouche de filtration par verrou amovible selon l'invention.
[Fig. 6a] et [Fig. 6b] représentent un schéma en perspective d'une vue d'ensemble avec un connecteur simple selon l'invention.
[Fig. 7a] et [Fig. 7b] représentent un schéma en perspective d'une vue d'ensemble avec un connecteur double selon l'invention.

### DESCRIPTION DETAILLEE D'UNE FORME DE REALISATION DE L'INVENTION

De nombreuses combinaisons peuvent être envisagées sans sortir du cadre de l'invention ; l'homme de métier choisira l'une ou l'autre en fonction des contraintes économiques, ergonomiques, dimensionnelles ou autres qu'il devra respecter.

Divers modes de réalisation de l'invention sont décrits ci-dessous notamment en référence aux figures illustratives et non limitatives.

La présente demande concerne des connecteurs interchangeables, adaptés sur une tête de filtration.

Les termes utilisés ne doivent pas être interprétés dans leur acception générale mais plutôt à la lumière des considérations fonctionnelles détaillées dans la présente demande.

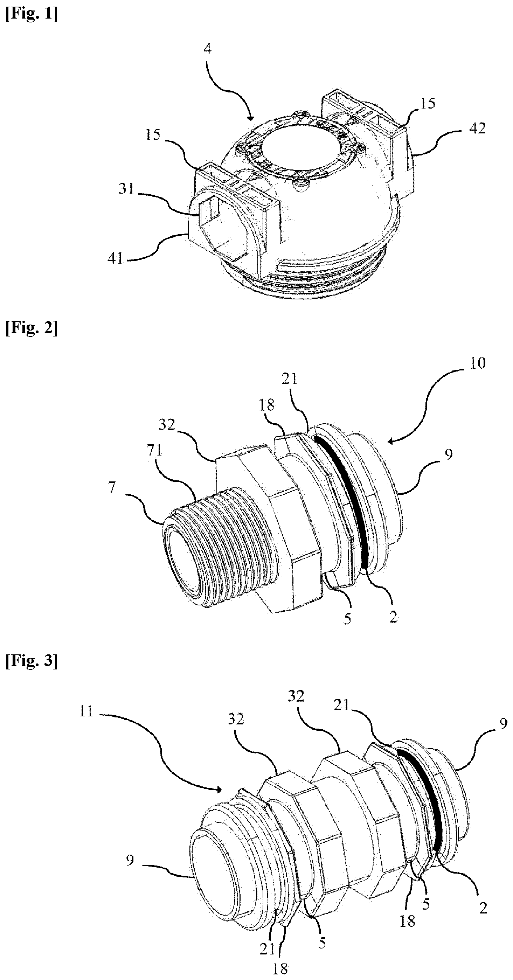

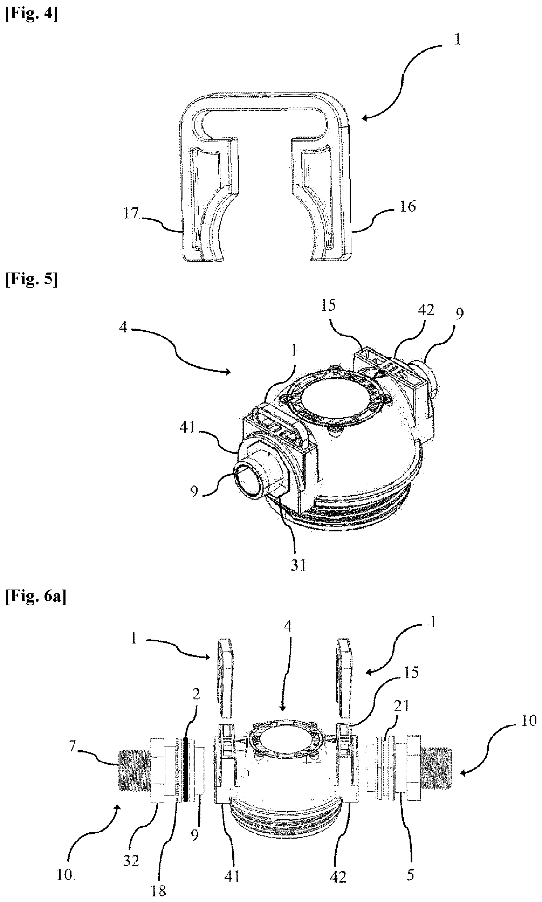

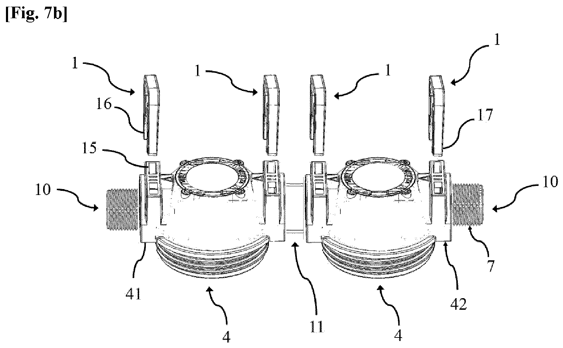

[Fig. 1], [Fig. 5], [Fig. 6a] à [Fig. 7b] sont des exemples de réalisation illustratifs et non limitatifs d'une tête de cartouche de filtration selon l'invention.

Comme cela est représenté par exemple sur [Fig. 1] et [Fig. 5] à [Fig. 7b], le système de filtration comprend une tête de filtration (4) présentant une entrée (41) et une sortie (42), et au moins un connecteur (10, 11) pour relier ledit système de filtration à une installation de filtration. Ledit connecteur (10, 11) et ladite tête de filtration (4) présentent chacun au moins un moyen de connexion réciproque de forme polygonale (31, 32) pour éviter une rotation dudit connecteur (10, 11) en cas de forte pression du débit de liquide filtré, par la mise en butée dudit connecteur (10, 11) sur ladite tête (4), via un joint d'étanchéité, et au moins un verrou amovible (1) pour maintenir ledit moyen de connexion (31, 32) réciproque dans ladite tête de filtration (4).

Dans certains modes de réalisation, le connecteur (10) établit une connexion de type filtre-tuyau entre la tête de filtre (4) et un tuyau de l'installation.

Dans certains modes de réalisation, le connecteur (11) établit une connexion de type filtre-filtre entre deux têtes de filtre (4).

Dans certains modes de réalisation, comme cela est représenté par exemple sur [Fig. 1] et [Fig. 5], le moyen de connexion réciproque de forme polygonale (31, 32) est de préférence de forme octogonale.

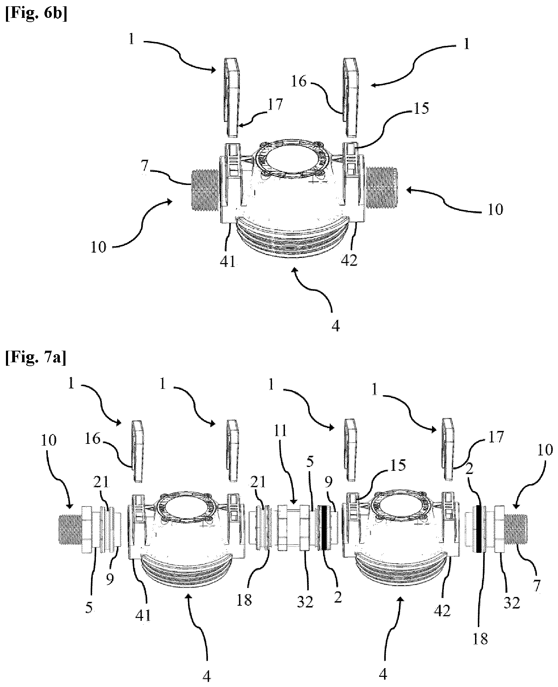

Dans certains modes de réalisation, le moyen de connexion réciproque de forme polygonale (31, 32) est de forme et de dimension adaptées aux connecteurs (10, 11). Dans certains modes de réalisation, comme cela est représenté par exemple sur [Fig. 2], [Fig. 6a] et [Fig. 6b], le système comprend un connecteur simple (10), ledit connecteur simple (10) comprend à l'une de ses extrémités un raccord (9) qui s'insère à l'intérieur de l'entrée (41) et/ou de la sortie (42) de la tête de filtration (4), un moyen de connexion réciproque (31, 32), une portion filetée (7) à son extrémité opposée comprenant un filetage (71) qui s'insère dans un tuyau de circulation de liquide, une rainure entre deux lèvres formant une gorge d'étanchéité (21) où vient se loger un moyen d'étanchéité (2), comme par exemple un joint torique, et une gorge (5) de verrouillage où vient se loger un verrou amovible (1) empêchant le mouvement du raccord à l'intérieur de la cartouche, comme par exemple un clip ou une agrafe, comme cela est représenté par exemple sur [Fig. 4].

Dans certains modes de réalisation, comme cela est représenté par exemple sur [Fig. 3], [Fig. 7a] et [Fig. 7b], le système comprend des moyens de connexion réciproque (31, 32), un connecteur double (11) permettant le raccord à deux cartouches de filtration, ledit connecteur double (11) comprenant à chaque extrémité un raccord (9) qui s'insère à l'intérieur de l'entrée (41) et/ou de la sortie (42) de la tête de filtration (4), deux moyens de connexion réciproques (31, 32) entre lesquels se trouve une gorge (5) de verrouillage où vient se loger un verrou amovible (1), et une rainure entre deux lèvres formant une gorge d'étanchéité (21) où vient se loger un moyen d'étanchéité (2).

Dans certains modes de réalisation, le système selon l'invention comprend au moins un moyen d'étanchéité (2) au niveau des moyens de connexion.

Dans certains modes de réalisation le moyen d'étanchéité (2) est un joint torique, maintenu dans une gorge d'étanchéité (21), comme cela est représenté par exemple sur [Fig. 2], [Fig. 3], [Fig. 6a] à [Fig. 7b].

Dans certains modes de réalisation, la gorge (5) de verrouillage est une portion circulaire du connecteur située entre une portion de raccord polygonal et un élément polygonal (18), où vient se loger un verrou amovible (1). La forme polygonale permet de limiter les risques de dévissage (dus aux coups de béliers problématiques dans le domaine) que présentent les raccords connus de l'art antérieur et d'accélérer le montage de l'installation, surtout en cas de cartouches filtrantes multiples montées en série.

Selon l'invention, le verrou amovible (1) comporte un clip amovible verrouillant la mise en butée entre le connecteur (10, 11) et ladite tête de filtration (4).

Dans certains modes de réalisation, un joint torique permet l'étanchéité du système de filtration au niveau de l'entrée (41) et de la sortie (42) de la tête de filtration (4).

La présente invention concerne également un dispositif de filtration.

Dans certains modes de réalisation, comme cela est représenté par exemple sur [Fig. 7a] et [Fig. 7b], le dispositif de filtration comprend un ensemble de têtes de filtration (4) comprenant une première tête de filtration (4) reliée à au moins une deuxième tête de filtration (4) grâce à des connecteurs (10, 11) dans un montage de type montage en série. Il est alors possible de former un ensemble de filtres en duplex avec deux cartouches de filtration identiques ou différents, en triplex avec trois cartouches de filtration identiques ou différentes, en quadruplex avec quatre cartouches de filtration identiques ou différentes, etc. Un tel dispositif permet en effet d'associer autant de cartouches filtrantes que nécessaires ou souhaitées par l'utilisateur, en fonction des besoins de l'installation. La présente demande décrit donc un nouveau type de raccordement présentant l'avantage d'accélérer et de faciliter l'installation quel que soit le nombre de cartouches filtrantes souhaité, grâce aux moyens de connexion rapides et étanches proposés dans la présente demande.

Dans certains modes de réalisation, comme cela est représenté par exemple sur [Fig. 7a] et [Fig. 7b], le dispositif de filtration est formé d'un ensemble de filtres monté en duplex comprenant deux têtes de filtration (4) reliées ensemble par un connecteur double (11). Chaque extrémité du connecteur double (11) est enfoncé à l'intérieur de l'entrée (41) et/ou de la sortie (42) de chaque tête de filtration (4). L'entrée (41) et/ou la sortie (42) libre de chaque tête de filtration (4) est à son tour reliée à un connecteur simple (10) pour être raccordée à un tuyau par l'intermédiaire de sa portion filetée (7).

Dans certains modes de réalisation, ledit connecteur simple (10) et ladite tête de filtration (4) présentent, chacun, un moyen de connexion réciproque, de forme polygonale pour éviter une rotation dudit connecteur (10) en cas de forte pression du débit de liquide filtré.

Dans certains modes de réalisation, le moyen de connexion réciproque (31, 32) de forme polygonale est de préférence de forme octogonale, pour éviter une rotation et un glissement longitudinalement en cas de surpression au moment de la variation brusque de la vitesse d'un liquide, par suite d'une fermeture ou d'une ouverture rapide d'une vanne, d'un robinet ou, du démarrage ou de l'arrêt d'une pompe.

Dans certains modes de réalisation, comme cela est représenté par exemple sur [Fig. 5] à [Fig. 7b], le moyen de connexion réciproque (31, 32) comportent un verrou amovible (1) verrouillant la mise en butée entre le connecteur et la tête de filtration (4). Dans certains modes de réalisation, le verrou amovible (1) est un clip dont l'épaisseur est complémentaire de la gorge (5) du connecteur (10, 11).

Dans certains modes de réalisation, comme cela est représenté par exemple sur [Fig. 5] à [Fig. 7b], le clip comprend deux branches (16, 17) amincies sur leurs bords internes et dont la découpe permet la flexibilité du clip.

Dans certains modes de réalisation, la face interne des branches (16, 17) forme un arc de cercle pour épouser, en s'enfonçant, la forme et les dimensions du connecteur (10, 11) circulaire.

Dans certains modes de réalisation, comme cela est représenté par exemple sur [Fig. 1], [Fig. 6a] à [Fig. 7b], les branches (16, 17) du clip s'insèrent dans un logement (15) et se mettent en butée sur le pourtour du connecteur au niveau de la gorge (5) pour enserrer ladite gorge (5) afin de bloquer le tuyau de canalisation dans le connecteur (10, 11). Le clip en s'enfonçant à l'intérieur du logement (15) se dilate autour du cercle du connecteur. Il est à noter que les dimensions du logement (15) sont complémentaires de l'épaisseur du clip et de la largeur du connecteur (10, 11).

Le moyen de connexion réciproque de forme polygonale est de forme et de dimension adaptées aux connecteurs (10, 11).

Dans certains modes de réalisation, le moyen de connexion réciproque est interchangeable.

La présente demande concerne également un procédé de fabrication d'un système de filtration mis en œuvre par le dispositif tel que décrit précédemment, le procédé comprenant les étapes suivantes :
Ménagement d'au moins un logement polygonal (31, 32) dans une tête de filtration (4), Fourniture d'au moins un connecteur ayant une extrémité de forme polygonale complémentaire audit logement comprenant une gorge d'étanchéité (21) dans laquelle est insérée un moyen d'étanchéité (2) et un conduit sensiblement cylindrique d'entrée du liquide dans une cartouche de filtration.

La présente invention concerne également un procédé de pose d'un connecteur (10, 11) amovible et interchangeable.

Dans certains modes de réalisation, le procédé de pose d'un connecteur amovible (10, 11) du système de filtration est mis en œuvre par le dispositif tel que décrit précédemment, le procédé comprenant les étapes suivantes :
Insertion du moyen de connexion à l'intérieur de l'entrée (41) et/ou de la sortie (42) de la tête de filtration (4).

Verrouillage du connecteur (10, 11) par le verrou amovible (1).

Insertion d'un tuyau d'une installation d'eau à la sortie du moyen de connexion.

On comprend donc que la présente demande fournit une solution permettant d'accélérer l'installation de cartouches filtrantes et de faciliter les manipulations nécessaires, tout en limitant le coût des dispositifs mis en œuvre et en limitant les quantités de stocks nécessaires pour les installateurs.

La présente invention concerne également un kit pour adaptation d'un système de filtration existant comportant au moins une cartouche de filtration, au moins un connecteur (10, 11), au moins un raccord, au moins un verrou amovible (1), au moins un moyen de connexion réciproque tels que décrits précédemment, le moyen de connexion réciproque étant interchangeable grâce au fait qu'il présente à sa sortie une portion filetée (7) de diamètre variable rendant le système compatible avec divers raccords. La présente demande permet donc d'économiser le nombre de raccords nécessaires pour l'installation de filtres et réduit ainsi les stocks et les coûts d'installation.

Le système selon l'invention permet donc d'interchanger le connecteur réalisant la liaison entre le filtre et le tuyau, évitant ainsi d'avoir à changer l'ensemble du filtre lorsque les dimensions de l'entrée et/ou de la sortie de la tête de filtre ne sont pas adaptées à celles du tuyau. Ainsi, de multiples étapes pour remplacer un filtre par un filtre aux bonnes dimensions sont évitées, les étapes de mise en place sont facilitées et minimisées, un gain de temps et de stockage est réalisé car la quantité de matériel nécessaire est amoindrie, une diminution de l'empreinte carbone est également réalisée en limitant le matériel nécessaire pour connecter le filtre au tuyau, et les coûts sont peu importants.

La présente demande décrit diverses caractéristiques techniques et avantages en référence aux figures et/ou à divers modes de réalisation. L'homme de métier comprendra que les caractéristiques techniques d'un mode de réalisation donné peuvent en fait être combinées avec des caractéristiques d'un ou plusieurs autre(s) mode(s) de réalisation à moins que l'inverse ne soit explicitement mentionné ou que ces caractéristiques ne soient incompatibles ou que la combinaison ne fonctionne pas. Plus généralement, des combinaisons de divers types de moyen de connexion du système de filtration sont envisagés et seront appréciés par l'homme de métier à l'aide des considérations fonctionnelles et structurelles fournies dans la présente demande. De plus, les caractéristiques techniques décrites dans un mode de réalisation donné peuvent être isolées des autres caractéristiques de ce mode à moins que l'inverse ne soit explicitement mentionné, notamment car les considérations fonctionnelles fournies dans la présente demande fourniront une explication suffisante pour que les adaptations structurelles éventuellement nécessaires soient à la portée de l'homme de métier.

Les personnes versées dans l'art, à la lecture de la présente demande, comprendront que des modes de réalisation sous de nombreuses autres formes spécifiques que celles décrites en détail sont possibles sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit être limitée aux détails donnés ci-dessus.

## Revendications

1. Système de filtration comprenant une tête de filtration (4) présentant une entrée (41) et une sortie (42), et au moins un connecteur (10, 11) pour relier ledit système de filtration à une installation de filtration, ledit connecteur (10, 11) et ladite tête de filtration (4) présentant chacun un moyen de connexion réciproque de forme polygonale (31, 32) pour éviter une rotation dudit connecteur (10, 11) en cas de forte pression du débit de liquide filtré, par la mise en butée dudit connecteur (10, 11) sur ladite tête (4), via un moyen d'étanchéité (2), et au moins un verrou amovible (1) pour maintenir ledit moyen de connexion (31, 32) réciproque dans ladite tête de filtration (4), **caractérisé en ce que** ledit connecteur comprend une gorge de verrouillage (5) où vient se loger le verrou amovible (1), ledit verrou amovible (1) comportant un clip flexible amovible verrouillant la mise en butée entre le connecteur (10, 11) et ladite tête de filtration (4), le clip comprenant deux branches (16, 17) présentant chacune une face interne formant un arc de cercle pour épouser la forme et les dimensions de la gorge de verrouillage (5) du connecteur.

2. Système de filtration selon la revendication 1, **caractérisé en ce que** le moyen de connexion réciproque de forme polygonale (31, 32) est de préférence de forme octogonale.

3. Système de filtration selon la revendication 2, **caractérisé en ce que** le moyen de connexion réciproque de forme polygonale (31, 32) est de forme et de dimension adaptées aux connecteurs (10, 11).

4. Système de filtration selon la revendication 1, **caractérisé en ce que** le moyen d'étanchéité (2) est un joint torique.

5. Système de filtration selon la revendication 4, **caractérisé en ce que** le joint torique est maintenu dans une gorge d'étanchéité (21).

6. Dispositif de filtration comprenant un système de filtration selon les revendications précédentes, **caractérisé en ce que** ledit dispositif comprend un ensemble de têtes de filtration (4) comprenant une première tête de filtration (4) reliée à au moins une deuxième tête de filtration (4) grâce à des connecteurs (11) dans un montage de type montage en série.

7. Procédé de fabrication d'un système de filtration mis en œuvre par le dispositif selon la revendication précédente, le procédé comprenant les étapes suivantes :
- Ménagement d'au moins un logement polygonal (31, 32) dans une tête de filtration (4),
- Fourniture d'au moins un connecteur ayant une extrémité de forme polygonale complémentaire audit logement comprenant une gorge d'étanchéité (21) dans laquelle est insérée un moyen d'étanchéité (2) et un conduit sensiblement cylindrique d'entrée du liquide dans une cartouche de filtration.

## Patentansprüche

1. Filtersystem, umfassend einen Filterkopf (4) mit einem Eingang (41) und einem Ausgang (42), und mindestens einen Verbinder (10, 11) zum Verbinden des Filtersystems mit einer Filteranlage, wobei der Verbinder (10, 11) und der Filterkopf (4) jeweils ein wechselseitiges Verbindungsmittel von polygonaler Form (31, 32) aufweisen, um eine Drehung des Verbinders (10, 11) bei hohem Druck des gefilterten Flüssigkeitsstroms durch das Anschlagen des Verbinders (10, 11) an dem Kopf (4) über ein Dichtungsmittel (2) zu verhindern, und mindestens eine abnehmbare Verriegelung (1) zum Halten des wechselseitigen Verbindungsmittels (31, 32) in dem Filterkopf (4), **dadurch gekennzeichnet, dass** der Verbinder eine Verriegelungsnut (5) umfasst, in der die abnehmbare Verriegelung (1) aufgenommen wird, wobei die abnehmbare Verriegelung (1) einen abnehmbaren flexiblen Clip umfasst, der das Anschlagen zwischen dem Verbinder (10, 11) und dem Filterkopf (4) verriegelt, wobei der Clip zwei Arme (16, 17) umfasst, die jeweils eine Innenfläche aufweisen, die einen Kreisbogen bildet, um die Form und die Abmessungen der Verriegelungsnut (5) des Verbinders zu umschließen.

2. Filtersystem nach Anspruch 1, **dadurch gekennzeichnet, dass** das wechselseitige Verbindungsmittel von polygonaler Form (31, 32) vorzugsweise eine oktogonale Form aufweist.

3. Filtersystem nach Anspruch 2, **dadurch gekennzeichnet, dass** das wechselseitige Verbindungsmittel von polygonaler Form (31, 32) in Form und Abmessung an die Verbinder (10, 11) angepasst ist.

4. Filtersystem nach Anspruch 1, **dadurch gekennzeichnet, dass** das Dichtungsmittel (2) ein O-Ring ist.

5. Filtersystem nach Anspruch 4, **dadurch gekennzeichnet, dass** der O-Ring in einer Dichtungsnut (21) gehalten wird.

6. Filtervorrichtung, umfassend ein Filtersystem nach den vorstehenden Ansprüchen, **dadurch gekennzeichnet, dass** die Vorrichtung ein Set von Filterköpfen (4) umfasst, das einen ersten Filterkopf (4) umfasst, der mit mindestens einem zweiten Filterkopf (4) durch Verbinder (11) in einer Anordnung vom Typ Reihenschaltung verbunden ist.

7. Verfahren zur Herstellung eines Filtersystems, das durch die Vorrichtung nach dem vorstehenden Anspruch implementiert wird, wobei das Verfahren die folgenden Schritte umfasst:
- Anbringung mindestens einer polygonalen Aufnahme (31, 32) in einem Filterkopf (4),
- Bereitstellung mindestens eines Verbinders mit einem Ende von polygonaler Form, die komplementär zu der Aufnahme ist, umfassend eine Dichtungsnut (21), in die ein Dichtungsmittel (2) eingesetzt ist, und eine im Wesentlichen zylindrische Leitung für den Eintritt von Flüssigkeit in eine Filterpatrone.

## Claims

1. Filtration system comprising a filtration head (4) having an inlet (41) and an outlet (42), and at least one connector (10, 11) for connecting said filtration system to a filtration installation, said connector (10, 11) and said filtration head (4) each having a polygonal reciprocal connection means (31, 32) to prevent rotation of said connector (10, 11) in the event of high pressure of the filtered liquid flow, by abutment of said connector (10, 11) on said head (4), via a sealing means (2), and at least one removable lock (1) for holding said connection means (31, 32) reciprocally in said filtration head (4), **characterized in that** said connector comprises a locking groove (5) in which the removable lock (1) is housed, said removable lock (1) comprising a removable flexible clip locking the abutment between the connector (10, 11) and said filtration head (4), the clip comprising two arms (16, 17) each having an inner face forming an arc of a circle to match the shape and dimensions of the locking groove (5) of the connector.

2. Filtration system according to claim 1, **characterized in that** the polygonal reciprocal connection means (31, 32) is preferably octagonal.

3. Filtration system according to claim 2, **characterized in that** the polygonal reciprocal connection means (31, 32) is of a shape and size adapted to the connectors (10, 11).

4. Filtration system according to claim 1, **characterized in that** the sealing means (2) is an O-ring.

5. Filtration system according to claim 4, **characterized in that** the O-ring is held in a sealing groove (21).

6. Filtration device comprising a filtration system according to the preceding claims, **characterized in that** said device comprises a set of filtration heads (4) comprising a first filtration head (4) connected to at least one second filtration head (4) by means of connectors (11) in a series-type assembly.

7. Method for manufacturing a filtration system implemented by the device according to the preceding claim, the method comprising the following steps:
- Arrangement of at least one polygonal housing (31, 32) in a filtration head (4),
- Provision of at least one connector having a polygonal end complementary to said housing comprising a sealing groove (21) into which is inserted a sealing means (2) and a substantially cylindrical conduit for liquid entry into a filtration cartridge.
